# EUROPÄISCHE PATENTSCHRIFT

(11) **EP 3 519 719 B1**
(45) Veröffentlichungstag und Bekanntmachung des Hinweises auf die Patenterteilung: **18.08.2021**
(21) Anmeldenummer: 17776998.1
(22) Anmeldetag: 25.09.2017
(51) Int. Cl.: F16H 57/04

(54) **GETRIEBE MIT EINEM HEIZELEMENT ZUM INDIREKTEN HEIZEN EINES BETRIEBSMITTELS, KRAFTFAHRZEUG**
TRANSMISSION WITH A HEATING ELEMENT FOR INDIRECTLY HEATING AN OPERATING MEDIUM, AND MOTOR VEHICLE
TRANSMISSION COMPRENANT UN ÉLÉMENT CHAUFFANT SERVANT AU CHAUFFAGE INDIRECT D'UN FLUIDE DE SERVICE ET VÉHICULE AUTOMOBILE

(30) Priorität: 29.09.2016 DE 102016218910
(43) Veröffentlichungstag der Anmeldung: 07.08.2019
(73) Patentinhaber: Audi AG, 85045 Ingolstadt (DE)
(72) Erfinder: KOPP, Andreas, 85092 Kösching (DE)
(86) Internationale Anmeldenummer: PCT/EP2017/074226
(87) Internationale Veröffentlichungsnummer: WO 2018/060135

(56) Entgegenhaltungen:
- WO-A2-2008/141811
- WO-A2-2008/141811
- DE-A1-102008 020 646
- DE-A1-102008 020 646
- DE-A1-102010 041 412
- DE-A1-102010 041 412
- US-A1- 2012 175 358

## Beschreibung

Die Erfindung betrifft ein Getriebe für ein Kraftfahrzeug mit einem Gehäuse, welches in einem Normalbetrieb des Getriebes mit einem Betriebsmittel befüllt ist, und einem Heizelement für das Betriebsmittel. Zur Erfindung gehört außerdem ein Kraftfahrzeug mit einem erfindungsgemäßen Getriebe.

Ein Getriebe kann in einem Kraftfahrzeug der Wandlung von mechanischen Größen, insbesondere Kräften, Drehmomenten und/oder Drehzahlen, insbesondere in einem Antriebsstrang des Kraftfahrzeugs, dienen. Beispiele für Getriebe in einem Kraftfahrzeug sind Verteilergetriebe, Differentiale, insbesondere Vorderachsdifferentiale oder Hinterachsdifferentiale, sowie ein Fahrzeuggetriebe, welches eine Motordrehzahl auf eine Antriebsdrehzahl übersetzt. Das Fahrzeuggetriebe kann als Schaltgetriebe, welches manuell durch einen Fahrer geschaltet wird, als Automatikgetriebe, beispielsweise als Wandlerautomatikgetriebe oder Doppelkupplungsgetriebe, oder als automatisiertes Schaltgetriebe ausgebildet sein. Durch Verluste im Getriebe, insbesondere Reibungsverluste an bewegbaren Teilen des Getriebes, kann sich das Getriebe erwärmen. Zur Kühlung sowie zur Schmierung der bewegbaren Teile des Getriebes kann ein Betriebsmittel vorgesehen sein.

Das Betriebsmittel kann mittels eines Wärmetauschers thermisch an eine Kühlflüssigkeit des Kraftfahrzeugs gekoppelt sein. Hierdurch ist eine Erwärmung des Betriebsmittels ermöglicht, wenn das Kühlmittel warm ist und das Betriebsmittel kalt ist, beziehungsweise eine Kühlung des Betriebsmittels ermöglicht, wenn das Betriebsmittel warm ist. Das Betriebsmittel kann beispielsweise aus Öl, beispielsweise Getriebeöl oder Differentialgetriebeöl, bestehen.

Ist das Betriebsmittel kalt, beispielsweise bei Fahrtantritt oder bei einer nicht ausreichenden Erwärmung über das Kühlmittel, beispielsweise im Falle eines elektrisch betriebenen Kraftfahrzeugs, so ergeben sich hohe Reibungsverluste, beispielsweise im Bereich mehrerer Kilowatt, aufgrund erhöhter Viskosität des Betriebsmittels. Um eine schnelle Erwärmung des Betriebsmittels zu gewährleisten, kann es vorgesehen sein, das Betriebsmittel mittels eines Heizelements zu heizen.

Beispielsweise offenbart die JP 2003 314 673 A ein Heizelement, welches rohrförmig ausgebildet ist und das Betriebsmittel durchsetzt, wobei in einem Betriebszustand Luft zunächst an einen Wärmetauscher mittels des heißen Abgases erwärmt wird und anschließend durch das Heizelement hindurchströmt.

Die CN 202 040 516 U offenbart ein als Heizdraht ausgebildetes Heizelement, wobei das Heizelement über eine Hülle thermisch mit dem Betriebsmittel gekoppelt ist.

Die US 589 55 90 A offenbart eine Heizvorrichtung für ein Betriebsmittel, wobei ein Heizelement durch eine Steuereinrichtung genau dann in Betrieb genommen ist, wenn ein Ladezustand eines elektrischen Energiespeichers eine vordefinierte Bedingung erfüllt und die Temperatur des Betriebsmittels unter einem vordefinierten Wert liegt.

Aus der WO 2008/141 811 A1 bekannt ist eine Kühlpatrone für ein Getriebe, welche aus lang gestreckten Kühlrohren geformt ist, die von einer Seite eines Grundkörpers ausgehen. Zur Montage am Getriebe wird die Kühlpatrone durch eine Öffnung eines Getriebegehäuses gesteckt und es wird der Grundkörper in die Öffnung geschraubt.

Die DE 10 2008 020 646 A1 beschreibt eine Vorrichtung zum Regeln und Steuern der Temperatur einer Achsanordnung für ein Fahrzeug. Eine Durchführung ist mit einem Heiz/Kühl-Fluidkreis eines Verbrennungsmotors verbunden. Das Heiz/Kühl-Fluid wird zu der Achsanordnung über eine Einlassdurchführung zirkuliert. Die Einlassdurchführung verläuft durch die Wand der Achsanordnung und endet an einem Wärmetauscher. Der Wärmetauscher ist unter der Sammelstelle angeordnet, die aus dem Schmierfluid der Achsanordnung ausgebildet ist. Während Kaltstartbedingungen erwärmt das Kühlmittel das Schmierfluid während eines Anfangsbetriebs des Fahrzeugs und auch bei niedrigen Betriebsgeschwindigkeiten.

Die US 2012/01 75 358 A1 zeigt eine Ablassschraube für eine Verbrennungskraftmaschine mit einem integrierten Heizstab zum Erwärmen einer Flüssigkeit.

Beim Beheizen des Betriebsmittels, insbesondere eines Öls, sollte die Wärmeleistung, welche pro Fläche an das Betriebsmittel abgegeben wird, einen vordefinierten Wert nicht überschreiten. Bei der Abgabe einer zu großen Wärmeleistung pro Flächeneinheit an einer thermischen Koppelfläche des Betriebsmittels können chemische Prozesse in dem Betriebsmittel stattfinden. Dadurch können dessen Eigenschaften, insbesondere dessen Schmiereigenschaften, verschlechtert werden. Insbesondere sollte die Wärmeleistung an der Koppelfläche des Betriebsmittels einen Wert von 2,5 Watt pro Quadratzentimeter nicht überschreiten. Die maximal mögliche Wärmeabgabe von dem Heizelement an das Betriebsmittel ist daher durch die Größe der Koppelfläche zur Abgabe der Wärmeleistung an das Betriebsmittel beschränkt. Für die Abgabe einer große Wärmeleistung ist demnach ein großes Heizelement nötig. Hierfür ist häufig nicht genügend Bauraum vorhanden.

Es ist Aufgabe der vorliegenden Erfindung, eine Koppelfläche zur Abgabe einer Wärmeleistung an das Betriebsmittel auf einfache Art und Weise zu vergrößern.

Die Aufgabe wird durch die Gegenstände der unabhängigen Patentansprüche gelöst. Vorteilhafte Weiterbildungen der Erfindung sind durch die abhängigen Patentansprüche beschrieben.

Ein Getriebe für ein Kraftfahrzeug weist ein Gehäuse auf, welches zumindest einen bewegbaren Getriebeteil, insbesondere eine Welle, ein Zahnrad oder ein Planetengetriebe, zumindest teilweise umschließt und in einem Normalbetrieb des Getriebes mit einem Betriebsmittel befüllt ist. Das Betriebsmittel kann der Wärmeverteilung beziehungsweise Wärmeableitung im Getriebe und/oder der Schmierung des zumindest einen bewegbaren Getriebeteils dienen. Das Betriebsmittel ist insbesondere ein Öl, vorzugsweise ein Mineralöl, oder auf Wasserbasis mit Additiven. In einem Betrieb des Getriebes kann das Betriebsmittel, wenn dieses kalt ist, für hohe Getriebeverluste sorgen. Aus diesem Grund ist ein Heizelement vorgesehen, das zur Abgabe einer Wärmeleistung zum Beheizen des Betriebsmittels ausgebildet ist.

Das Heizelement ist dazu ausgebildet, in einem Betriebszustand die Wärmeleistung überwiegend oder vollständig indirekt, nämlich über das Gehäuse, an das Betriebsmittel abzugeben beziehungsweise zu übertragen. Um eine Koppelfläche zur Abgabe der Wärmeleistung an das Betriebsmittel auf einfache Art und Weise zu vergrößern, ist erfindungsgemäß vorgesehen, dass das Heizelement zur Abgabe der Wärmeleistung an das Gehäuse über eine erste Koppelfläche und das Gehäuse zur Abgabe der Wärmeleistung an das Betriebsmittel über eine zweite Koppelfläche ausgebildet ist und hierdurch die Wärmeleistung von dem Heizelement an das Betriebsmittel überwiegend oder vollständig indirekt über das Gehäuse übertragbar ist, nämlich vom Heizelement in das Gehäuse und von dem Gehäuse in das Betriebsmittel.

Die erste Koppelfläche kann durch eine Berührfläche des Heizelements mit dem Gehäuse gebildet sein. Die zweite Koppelfläche kann durch diejenigen Flächen gebildet sein, an denen eine Abgabe von Wärmeleistung durch das Gehäuse an das Betriebsmittel mit mehr als 0,25 W/cm² oder 0,5 W/cm² (Watt pro Quadratzentimeter) oder 1 W/cm² oder 1,5 W/cm² oder 2 W/cm², insbesondere jedoch mit weniger als 2,5 W/cm², erfolgt. Die Koppelfläche zur Abgabe der Wärmeleistung an das Betriebsmittel kann durch diejenigen Flächen gebildet sein, an welchen eine Wärmeabgabe von mehr als 0,25 W/cm² oder 0,5 W/cm² oder 1 W/cm² oder 1,5 W/cm² oder 2 W/cm², insbesondere durch das Gehäuse und/oder direkt durch das Heizelement, vorzugsweise mit weniger als 2,5 W/cm², erfolgt. Die Koppelfläche zur Abgabe der Wärmeleistung an das Betriebsmittel ist im Folgenden als Betriebsmittelkoppelfläche bezeichnet.

Das Heizelement kann entweder ausschließlich zur Abgabe der Wärmeleistung an das Gehäuse mittels der ersten Koppelfläche ausgebildet sein oder zur Abgabe der Wärmeleistung sowohl an das Gehäuse mittels der ersten Koppelfläche als auch zur direkten Abgabe der Wärmeleistung an das Betriebsmittel mittels einer dritten Koppelfläche ausgebildet sein. Ist das Heizelement auch zur direkten Abgabe der Wärmeleistung an das Betriebsmittel ausgebildet, so erfolgt die Abgabe der Wärmeleistung an das Betriebsmittel durch das Heizelement dennoch überwiegend indirekt über das Gehäuse. Durch die maßgeblich indirekte Wärmeabgabe des Heizelements an das Betriebsmittel mittels des Gehäuses kann die Betriebsmittelkoppelfläche, welche sich insbesondere aus der zweiten Koppelfläche und der dritten Koppelfläche zusammensetzt, gegenüber dem Stand der Technik mit einfachen Mitteln vergrößert werden.

Gemäß der Erfindung ist das Gehäuse mit einem Gehäuseteil aus einem ersten Material gefertigt und weist ein Wärmeleitelement zur Verteilung und/oder Leitung der Wärmeleistung auf, wobei das Wärmeleitelement aus einem zweiten Material gebildet ist, welches einen größeren Wärmeleitkoeffizienten als das erste Material aufweist. Durch das Wärmeleitelement kann eine gezielte Leitung der Wärmeleistung über das Gehäuse hinweg ermöglicht sein. Das Wärmeleitelement kann zur Vergrößerung der zweiten Koppelfläche durch eine verbesserte Wärmeleitung im Gehäuse ausgebildet sein. Insbesondere kann das Gehäuse mehrere Wärmeleitelemente aufweisen.

In einer Ausbildungsform der Erfindung ist das Heizelement zur Abgabe zumindest der Hälfte einer durch das Heizelement erzeugten Wärmeleistung an das Gehäuse mittels der ersten Koppelfläche ausgebildet. Vorzugsweise ist das Heizelement zur Abgabe von zumindest 60 Prozent oder 70 Prozent oder 80 Prozent oder 90 Prozent der durch das Heizelement erzeugten Wärmeleistung an das Gehäuse mittels der ersten Koppelfläche ausgebildet.

In einer Weiterbildung der Erfindung ist die zweite Koppelfläche mindestens um den Faktor 2 größer als die erste Koppelfläche und das Gehäuse ist zu einer Verteilung der Wärmeleistung von der kleineren ersten Koppelfläche auf die größere zweite Koppelfläche ausgebildet. Vorzugsweise ist die zweite Koppelfläche mindestens um den Faktor 3 oder den Faktor 4 oder den Faktor 5 größer als die erste Koppelfläche. Dadurch, dass die zweite Koppelfläche größer ist als die erste Koppelfläche, kann das Heizelement im Vergleich zur Koppelfläche zur Abgabe der Wärmeleistung an das Betriebsmittel besonders kompakt ausgebildet sein. Dadurch, dass die zweite Koppelfläche zumindest um den Faktor 2 oder 3 oder 4 oder 5 größer ist als die erste Koppelfläche, ergibt sich dennoch eine große Koppelfläche zur Abgabe der Wärmeleistung an das Betriebsmittel.

In einer Ausführungsform ist das Getriebe zu einer Verteilung der Wärmeleistung mittels des Gehäuses ausgelegt, wodurch die erste Koppelfläche im Betrieb des Heizelements eine höhere Temperatur als die zweite Koppelfläche aufweist. Demnach kann das Gehäuse zur Verteilung der Wärmeleistung von einer hohen Temperatur an der ersten Koppelfläche auf eine geringe Temperatur an der zweiten Koppelfläche ausgebildet sein. Insbesondere ist das Gehäuse zu einer Verteilung der Wärmeleistung von einer kleinen Fläche und einer hohen Temperatur an der ersten Koppelfläche zu einer großen Fläche und einer geringen Temperatur an der zweiten Koppelfläche ausgebildet.

In einer Weiterbildung der Erfindung weist die Außenseite des Gehäuses eine thermische Isolierschicht auf. Durch die thermische Isolierschicht können thermische Verluste durch eine Wärmeabgabe des Gehäuses hin zur Außenseite des Gehäuses verringert werden. Insbesondere kann eine Richtwirkung Wärmeleistung von dem Heizelement hin zur Innenseite des Gehäuses erreicht werden.

In einer Ausführungsform der Erfindung ist das Heizelement zum Erzeugen der Wärmeleistung elektrisch betreibbar. Mit anderen Worten ist das Heizelement in einem Betriebszustand elektrisch betrieben. Durch das elektrisch betreibbare Heizelement kann sich eine besonders kompakte Bauform des Heizelements ergeben. Die Abgabe von Wärmeleistung durch das elektrische Heizelement kann durch die Steuerung einer dem elektrischen Heizelement zugeführten elektrischen Leistung besonders leicht steuerbar sein.

In einer Weiterbildung der Erfindung ist eine Trägereinrichtung zur Aufnahme des Heizelements am Gehäuse bereitgestellt. Die Trägereinrichtung kann Teil des Gehäuses sein oder an dem Gehäuse festgelegt sein. Insbesondere ist die Trägereinrichtung mittels eines Schraubgewindes am Gehäuse festgelegt. Mittels der Trägereinrichtung ist eine besonders einfache Festlegung und/oder Nachrüstung des Heizelement am Gehäuse ermöglicht.

In einer Weiterbildung der Erfindung ist die Trägereinrichtung in ein Schraubgewinde einer Auslassöffnung für das Betriebsmittel eingeschraubt. Auf diese Weise kann eine besonders einfache Montage des Heizelements an dem Gehäuse ermöglicht sein. Insbesondere kann an bauliche Anpassungen des Getriebes beziehungsweise des Gehäuses des Getriebes verzichtet werden, wenn eine bereits vorhandene Auslassöffnung zur Festlegung der Trägereinrichtung mittels des Schraubgewindes ausgebildet ist.

Zur Erfindung gehört außerdem ein Kraftfahrzeug mit einem erfindungsgemäßen Getriebe. Die zweckmäßigen Weiterbildungen und Ausbildungsformen des erfindungsgemäßen Getriebes sowie deren Vorteile gelten analog auch für das erfindungsgemäße Kraftfahrzeug.

Im Folgenden ist ein Ausführungsbeispiel der Erfindung beschrieben. Hierzu zeigt:
- Fig. 1: eine schematische Schnittzeichnung eines ersten Ausführungsbeispiels eines erfindungsgemäßen Getriebes;
- Fig. 2: eine schematische Schnittzeichnung eines zweiten Ausführungsbeispiels eines erfindungsgemäßen Getriebes; und
- Fig. 3: eine schematische Schnittzeichnung eines dritten Ausführungsbeispiels eines erfindungsgemäßen Getriebes.

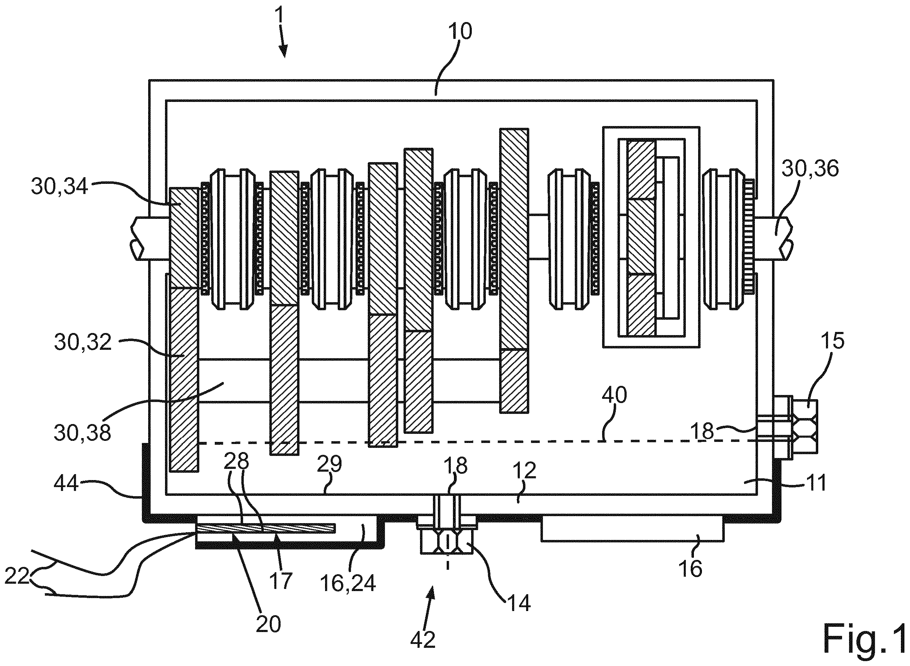

Die Fig. 1, Fig. 2 und Fig. 3 zeigen ein Getriebe 1 für ein Kraftfahrzeug mit einem Gehäuse 10, welches vorliegend mehrere bewegbare Getriebeteile 30 umschließt. Das Gehäuse 10 ist mit einem Betriebsmittel 11, vorliegend einem Getriebeöl, bis zu einem Ölfüllstand 40 befüllt. Das Betriebsmittel 11 ist zur Schmierung der bewegbaren Getriebeteile 30 des Getriebes 1 ausgebildet. Die bewegbaren Getriebeteile 30 sind in einem Betrieb des Getriebes 1 zumindest teilweise in Bewegung. Durch eine optimale Schmierung der bewegbaren Getriebeteile 30 kann ein Verschleiß reduziert und eine Lebensdauer erhöht werden. Die bewegbaren Getriebeteile 30 umfassen vorliegend ausgangsseitige Zahnräder 32, eingangsseitige Zahnräder 34, eine ausgangsseitige Welle 38 sowie eine eingangsseitige Welle 36. Die Getriebeteile 30 können zur Übertragung und/oder Wandlung von Antriebskräften des Kraftfahrzeugs ausgebildet sein. Insbesondere können die Getriebeteile 30 zur Wandlung eines Drehmoments und/oder einer Drehzahl und/oder einer Kraft ausgebildet sein. Insbesondere erfolgt die Kraftzufuhr in das Getriebe über die eingangsseitige Welle 36, welche als Antriebswelle ausgebildet sein kann. Insbesondere erfolgt die Kraftabfuhr von dem Getriebe 1 mittels der ausgangsseitigen Welle 38, welche als Abtriebswelle ausgebildet sein kann.

Das Betriebsmittel 11, vorliegend als Getriebeöl ausgebildet, kann in anderen Ausbildungsformen als anderes Öl, insbesondere Mineralöl, oder auf Wasserbasis mit geeigneten Additiven ausgebildet sein. Das Gehäuse 10 weist zwei Auslassöffnungen 18 für das Betriebsmittel 11 auf. Eine der Auslassöffnungen 18 ist vorliegend mit einer Ölablassschraube 14 und eine andere der Auslassöffnungen 18 ist vorliegend mit einer Ölkontrollschraube 15 verschlossen.

Die Schmierung der bewegbaren Getriebeteile 30 erfolgt nur dann optimal, wenn das Betriebsmittel 11 eine vorbestimmte Betriebstemperatur aufweist. Ist die Temperatur des Betriebsmittels 11 geringer als die vordefinierte Betriebstemperatur des Betriebsmittels 11, so können hohe Getriebeverluste bei der Übertragung der Antriebskräfte des Kraftfahrzeugs entstehen. Hierdurch wird der Kraftstoffverbrauch, im Falle eines Kraftfahrzeugs mit einem Verbrennungsmotor, beziehungsweise der Verbrauch an elektrischer Energie, im Falle eines Kraftfahrzeugs mit einem elektrischen Antrieb, erhöht. Je nach Jahreszeit und Außentemperatur können die Getriebeverluste im Bereich von beispielsweise 1,5 kW bis 5 kW liegen, wenn die Temperatur des Betriebsmittels 11 geringer ist als die vorbestimmte Betriebstemperatur. Demgegenüber können die Getriebeverluste im Bereich von beispielsweise 100 W bis 500 W liegen, wenn die Temperatur des Betriebsmittels 11 der vorbestimmten Betriebstemperatur entspricht. Außerdem kann durch ein kaltes Betriebsmittel 11 ein Verschleiß an den bewegbaren Getriebeteilen 30 erhöht werden.

Um das Betriebsmittel 11 zügig auf seine vorbestimmte Betriebstemperatur aufzuheizen, weist das Getriebe 1 ein Heizelement 20 auf. Das Heizelement 20 ist zur Abgabe einer Wärmeleistung zum Beheizen des Betriebsmittels 11 ausgebildet. Das Heizelement 20 ist vorliegend elektrisch betreibbar. Das bedeutet, dass das Heizelement 20 in einem Heizbetrieb elektrisch betrieben ist. Im Heizbetrieb ist das Heizelement 20 von einem elektrischen Strom durchflossen ist und stellt mittels einer zugeführten elektrischen Leistung die Wärmeleistung bereit. In anderen Ausbildungsformen kann das Heizelement 20 als Wärmetauscher, insbesondere zum Tausch von Abgaswärme oder Wärme aus dem Kühlkreislauf des Kraftfahrzeugs, oder mittels eines Brennstoffs betreibbar ausgebildet sein. Ein elektrisch beheizbares Heizelement 20 kann Drähte 22 zur Zufuhr einer elektrischen Leistung aufweisen. Insbesondere ermöglicht ein elektrisch betreibbares Heizelement 20 eine besonders einfache Regelung der Abgabe der Wärmeleistung durch das Heizelement 20 durch Steuern einer dem Heizelement 20 zugeführten elektrischen Leistung.

Um eine Betriebsmittelkoppelfläche beziehungsweise Gesamtkoppelfläche zur Übertragung von Wärmeleistung an das Betriebsmittel 11 zu vergrößern, ist das Heizelement 20 vorliegend zur Abgabe der Wärmeleistung an das Gehäuse 10 über eine erste Koppelfläche 28 und das Gehäuse 10 zur Abgabe der Wärmeleistung an das Betriebsmittel 11 über eine zweite Koppelfläche 29 ausgebildet. Vorliegend ist das Heizelement 20 zu keiner direkten Abgabe von Wärmeleistung an das Betriebsmittel 11 ausgebildet. Ein Teilbereich des Gehäuses 10 kann als Wärmeleitelement 12 ausgebildet sein. Vorliegend ist der gesamte untere Teil des Gehäuses 10 als Wärmeleitelement 12 ausgebildet. Das Wärmeleitelement 12 ist aus einem Material, insbesondere Metall, mit einem besonders großen Wärmeleitkoeffizienten gebildet. Aus diesem Grund ist die zweite Koppelfläche 29 zur Abgabe von Wärmeleistung von dem Gehäuse 10 an das Betriebsmittel 11 besonders groß. Insbesondere ist die zweite Koppelfläche 29 mindestens um den Faktor 2, vorzugsweise um den Faktor 3 oder 4 oder 5, größer als die erste Koppelfläche 28.

Das Heizelement 20 ist vorliegend zur Abgabe der Wärmeleistung mit einer hohen Temperatur über die kleine erste Koppelfläche 28 ausgebildet. Das Getriebe 1 ist vorliegend mittels des Gehäuses 10 und insbesondere des Wärmeleitelements 12 zur Verteilung der durch das Heizelement 20 abgegebenen Wärmeleistung von der ersten Koppelfläche 28 auf die zweite Koppelfläche 29 ausgebildet. Durch die Verteilung der Wärmeleistung von der kleinen ersten Koppelfläche 28 auf die große zweite Koppelfläche 29 kann sich die Temperatur verringern. Insbesondere ist die Temperatur der ersten Koppelfläche 28 höher als die der zweiten Koppelfläche 29. Das Gehäuse 10 ist mittels der zweiten Koppelfläche 29 zur Abgabe der Wärmeleistung an das Betriebsmittel 11 ausgebildet. Insbesondere sind als Koppelfläche 29 diejenigen Bereiche des Gehäuses 10 bezeichnet, an welchen eine Abgabe von Wärmeleistung von dem Gehäuse 10 an das Betriebsmittel 11 mit einer thermischen Leistungsdichte von mehr als 0,25 W/cm² (Watt pro Quadratzentimeter) oder 0,5 W/cm² oder 1 W/cm² oder 1,5 W/cm² oder 2 W/cm² erfolgt. Insbesondere ist die erste Koppelfläche 28 die Berührungsfläche zwischen dem Heizelement 20 und dem Gehäuse 10. Durch die großflächige zweite Koppelfläche 29 ist die Abgabe großer Wärmeleistungen an das Betriebsmittel 11 ermöglicht, ohne einen vordefinierten Grenzwert für die Leistungsdichte der Abgabe von Wärmeleistung an das Betriebsmittel 11, insbesondere von 2,5 Watt pro Quadratzentimeter, zu überschreiten. Insbesondere können chemische oder physikalische Strukturveränderungen des Betriebsmittels 11 durch zu hohe Temperaturen an der zweiten Koppelfläche 29 vermieden werden.

Durch die Nutzung des Gehäuses 10 zur Abgabe von Wärmeleistung an das Betriebsmittel 11 ist eine besonders kompakte Bauform des Getriebes 1 ermöglicht, da es nicht nötig ist, ein Heizelement 20 im Inneren des Gehäuses 10 zu platzieren. Insbesondere ist es nicht nötig, mehrere und/oder großflächige Heizelemente 20 im Inneren des Gehäuses 10 vorzusehen.

Fig. 1 zeigt eine erste Ausführungsform eines Getriebes 1 mit einem Heizelement 20 zur indirekten Abgabe der Wärmeleistung an das Betriebsmittel 11 mittels des Gehäuses 10. Das Gehäuse 10 weist vorliegend zwei Rippen 16 auf, welche beispielsweise zur Stabilisierung des Gehäuses 10 ausgebildet sind. Eine der Rippen 16 ist als Trägereinrichtung 24 für das Heizelement 20 ausgebildet. Die Trägereinrichtung 24 weist eine Aufnahme 17 auf, welche zur Aufnahme des Heizelements 20 ausgebildet ist. Die berührenden Oberflächen der Aufnahme 17 und des Heizelements 20 bilden die erste Koppelfläche aus. Insbesondere kann die zur Trägereinrichtung 24 ausgebildete Rippe 16 als weiteres Wärmeleitelement zur Verteilung und/oder Leitung der Wärmeleistung ausgebildet sein.

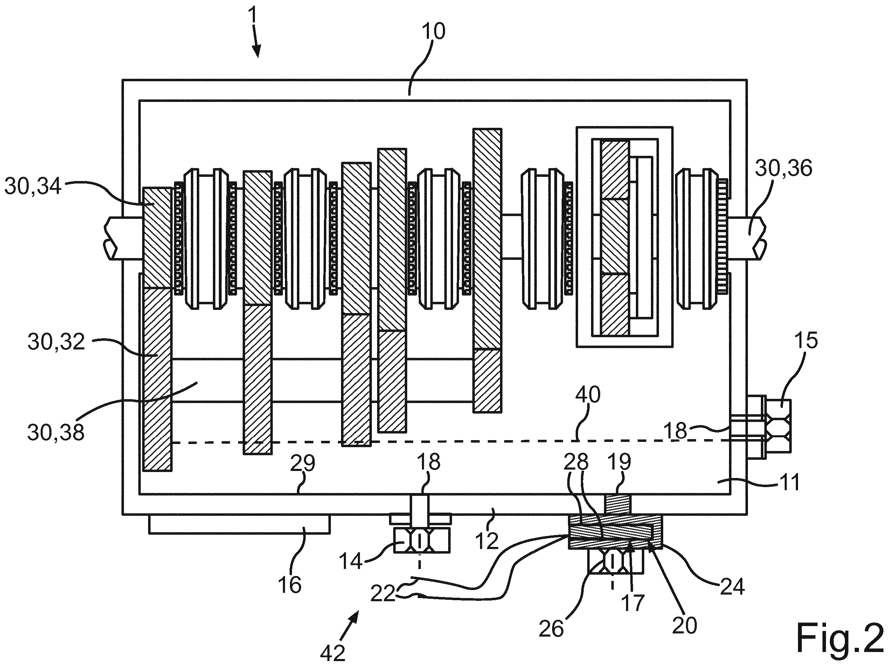

Fig. 2 zeigt eine zweite Ausführungsform eines erfindungsgemäßen Getriebes 1, wobei das Gehäuse 10 eine Trägerbohrung 19 zur Festlegung einer Trägereinrichtung 24 aufweist. Insbesondere ist die Trägereinrichtung 24 mittels eines Schraubgewindes und eines korrespondierenden Schraubgewindes der Trägerbohrung 19 schraubbar an dem Gehäuse 10 festlegbar. Die Trägereinrichtung 24 kann partiell als Mutter 26 ausgebildet sein, um eine Festlegung der Trägereinrichtung 24 an dem Gehäuse 10 zu erleichtern. Die Trägereinrichtung 24 weist eine Aufnahme 17 zur Aufnahme des Heizelements 20 auf. Die Berührungsflächen zwischen Aufnahme 17 und Heizelement 20 bilden auch hier die erste Koppelfläche 28. Das Gehäuse 10 weist in seinem unteren Bereich ein Wärmeleitelement 12 auf, welches zur Verteilung und/oder Leitung der Wärmeleistung entlang der zweiten Koppelfläche 29 ausgebildet ist.

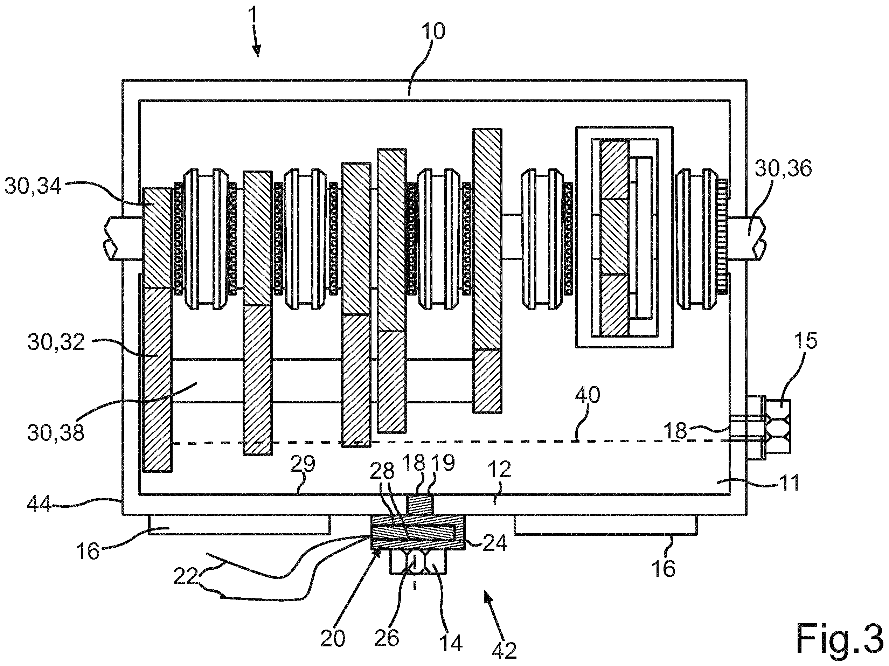

Die Fig. 3 zeigt eine dritte Ausführungsform eines Getriebes 1, wobei eine Auslassöffnung 18 als Trägerbohrung 19 ausgebildet ist. Die Festlegung der Trägereinrichtung 24 mittels des Schraubgewindes sowie die Festlegung des Heizelements 20 ist analog zu Fig. 2 ausgeführt.

Das Schraubgewinde zwischen Trägerbohrung 19 und Trägereinrichtung 24 kann eine weitere Koppelfläche ausbilden, welche zur Abgabe von Wärmeleistung von der Trägereinrichtung 24 an das Gehäuse 10 ausgebildet ist.

In anderen nicht gezeigte Ausführungsformen der Erfindung ist eine dritte Koppelfläche zur direkten Abgabe der Wärmeleistung von des Heizelement 20 an das Betriebsmittel 11 ausgebildet.

Zur Regelung einer Leistungsabgabe des Heizelements 20 kann eine Steuereinheit vorgesehen sein, die zur Auswertung eines Temperatursignals eines Temperaturfühlers im Gehäuse 10, wobei das Temperatursignal die Temperatur des Betriebsmittels 11 beschreibt, ausgebildet ist. Die Steuereinheit kann weiterhin dazu ausgebildet sein, die Temperatur des Betriebsmittels 11 mit einem vordefinierten Temperaturwert, welcher insbesondere der vorgegebenen Betriebstemperatur des Betriebsmittels 11 entspricht, zu vergleichen. Ist die Temperatur des Betriebsmittels 11 geringer als der vordefinierte Temperaturwert, so kann die Bereitstellung einer elektrischen Leistung an dem Heizelement 20 mittels der Drähte 22 vorgesehen sein. Entspricht der Temperaturwert des Betriebsmittels 11 dem vordefinierten Temperaturwert oder ist größer als dieser, so kann vorgesehen sein, dass dem Heizelement 20 keine elektrische Leistung zugeführt wird.

Das Getriebe 1 kann als automatisches Schaltgetriebe, als manuelles Schaltgetriebe, als teilautomatisiertes Schaltgetriebe, als Verteilergetriebe oder als Differential ausgebildet sein.

Es kann die Verwendung eines Heizelements 20 oder mehrerer Heizelementen 20 vorgesehen sein. Das Heizelement 20 kann direkt in das Gehäuse 10 eingebracht werden, sodass eine dauerhafte und gleichmäßig verteilte Wärmeübertragung auf das Gehäuse 10 und von dem Gehäuse 10 in das Betriebsmittel 11 sichergestellt ist. Das Gehäuse 10 ist, insbesondere partiell, aus einem Metall mit einem guten Wärmeleitkoeffizienten ausgebildet. Hierdurch kann ein Wärmeleitelement 12 gebildet sein. So kann über die große Oberfläche des Gehäuses 10 als zweite Koppelfläche 29 die Wärmeleistung gleichmäßig an das Betriebsmittel 11 abgegeben werden.

Das Gehäuse 10 kann insbesondere an dessen Unterseite 42 eine isolierende Schicht 44 aufweisen. Mittels der isolierenden Schicht 44 kann eine Wärmeabgabe des Gehäuses 10 hin zu dessen Außenseite verringert beziehungsweise vermieden werden. Auf diese Weise kann bei gleicher Heizwirkung auf das Betriebsmittel 11 eine Heizleistung des Heizelements 20 verringert werden. Durch eine aus der isolierenden Schicht 44 resultierende Richtwirkung der Wärmeabgabe kann alternativ oder zusätzlich die zweite Koppelfläche 29 vergrößert werden und/oder eine schnellere Erwärmung des Betriebsmittels 11 erzielt werden.

Das Getriebe 1 kann als Verteilergetriebe, Differentiale, insbesondere Vorderachsdifferentiale oder Hinterachsdifferentiale, oder als Fahrzeuggetriebe, welches eine Motordrehzahl auf eine Antriebsdrehzahl übersetzt, für ein Kraftfahrzeug ausgebildet sein. Das Getriebe 1 kann als Schaltgetriebe, welches manuell durch einen Fahrer geschaltet wird, als Automatikgetriebe, beispielsweise als Wandlerautomatikgetriebe oder Doppelkupplungsgetriebe, oder als automatisiertes Schaltgetriebe ausgebildet sein.

## Patentansprüche

1. Getriebe (1) für ein Kraftfahrzeug, mit einem Gehäuse (10), welches zumindest einen bewegbaren Getriebeteil (30) zumindest teilweise umschließt und in einem Normalbetrieb des Getriebes (1) mit einem Betriebsmittel (11) befüllt ist, und mit einem Heizelement (20), das zur Abgabe einer Wärmeleistung zum Beheizen des Betriebsmittels (11) ausgebildet ist, wobei
das Heizelement (20) zur Abgabe der Wärmeleistung an das Gehäuse (10) über eine erste Koppelfläche (28) und das Gehäuse (10) zur Abgabe der Wärmeleistung an das Betriebsmittel (11) über eine zweite Koppelfläche (29) ausgebildet ist und hierdurch die Wärmeleistung von dem Heizelement (20) an das Betriebsmittel (11) überwiegend oder vollständig indirekt über das Gehäuse (10) übertragbar ist,
**dadurch gekennzeichnet, dass**
das Gehäuse (10) mit einem Gehäuseteil aus einem ersten Material gefertigt ist und ein Wärmeleitelement (12) zur Verteilung und/oder Leitung der Wärmeleistung aufweist, wobei das Wärmeleitelement (12) aus einem zweiten Material gebildet ist, welches einen größeren Wärmeleitkoeffizienten als das erste Material aufweist.

2. Getriebe (1) nach Anspruch 1,
**dadurch gekennzeichnet, dass**
eine Trägereinrichtung (24) zur Aufnahme des Heizelements (20) am Gehäuse (10) bereitgestellt ist und die Trägereinrichtung (24) in ein Schraubgewinde einer Auslassöffnung (18) für das Betriebsmittel (11) eingeschraubt ist.

3. Getriebe (1) nach Anspruch 1 oder 2,
**dadurch gekennzeichnet, dass**
das Heizelement (20) zur Abgabe zumindest der Hälfte einer durch das Heizelement erzeugten Wärmeleistung an das Gehäuse (10) mittels der ersten Koppelfläche (28) ausgebildet ist.

4. Getriebe (1) nach einem der vorhergehenden Ansprüche,
**dadurch gekennzeichnet, dass**
die zweite Koppelfläche (29) mindestens um den Faktor 2 größer ist als die erste Koppelfläche (28) und das Gehäuse (10) zu einer Verteilung der Wärmeleistung von der kleineren ersten Koppelfläche (28) auf die größere zweite Koppelfläche (29) ausgebildet ist.

5. Getriebe (1) nach einem der vorhergehenden Ansprüche,
**dadurch gekennzeichnet, dass**
das Getriebe (1) zu einer Verteilung der Wärmeleistung mittels des Gehäuses (10) ausgelegt ist und hierdurch die erste Koppelfläche (28) im Betrieb des Heizelements (20) eine höhere Temperatur als die zweite Koppelfläche (29) aufweist.

6. Getriebe (1) nach einem der vorhergehenden Ansprüche,
**dadurch gekennzeichnet, dass**
die Außenseite des Gehäuses (10) eine thermische Isolierschicht aufweist.

7. Getriebe (1) nach einem der vorhergehenden Ansprüche,
**dadurch gekennzeichnet, dass**
das Heizelement (20) das Gehäuse (10) zumindest teilweise durchdringt.

8. Getriebe (1) nach einem der vorhergehenden Ansprüche,
**dadurch gekennzeichnet, dass**
das Heizelement (20) zum Erzeugen der Wärmeleistung elektrisch betreibbar ist.

9. Kraftfahrzeug mit einem Getriebe (1) gemäß einem der Ansprüche 1 bis 8.

## Claims

1. Transmission (1) for a motor vehicle, having a housing (10) which at least partially encloses at least one movable transmission part (30) and which in a normal operating mode of the transmission (1) is filled with an operating medium (11), and having a heating element (20) which is configured for outputting a heat output for heating the operating medium (11), wherein
the heating element (20) is configured for outputting the heat output to the housing (10) by means of a first coupling surface (28) and the housing (10) is configured for outputting the heat output to the operating medium (11) by means of a second coupling surface (29) and thus the heat output can be transferred from the heating element (20) to the operating medium (11) predominantly or completely indirectly by means of the housing (10),
**characterised in that**
the housing (10) is produced with one housing part made of a first material and has a thermal conducting element (12) for distributing and/or conducting the heat output, wherein the thermal conducting element (12) is formed from a second material which has a greater coefficient of thermal conductivity than the first material.

2. Transmission (1) according to claim 1,
**characterised in that**
a carrier device (24) is provided on the housing (10) for accommodating the heating element (20) and the carrier device (24) is screwed into a screw thread of an outlet opening (18) for the operating medium (11).

3. Transmission (1) according to claim 1 or 2,
**characterised in that**
the heating element (20) is configured for outputting at least half of a heat output generated by the heating element to the housing (10) by means of the first coupling surface (28).

4. Transmission (1) according to any of the preceding claims,
**characterised in that**
the second coupling surface (29) is larger at least by a factor of 2 than the first coupling surface (28) and the housing (10) is designed to distribute the heat output from the smaller first coupling surface (28) onto the larger second coupling surface (29).

5. Transmission (1) according to any of the preceding claims,
**characterised in that**
the transmission (1) is designed to distribute of the heat output by means of the housing (10) and hereby, during operation of the heating element (20), the first coupling surface (28) has a higher temperature than the second coupling surface (29).

6. Transmission (1) according to any of the preceding claims,
**characterised in that**
the outer side of the housing (10) has a thermal insulating layer.

7. Transmission (1) according to any of the preceding claims,
**characterised in that**
the heating element (20) at least partially penetrates the housing (10).

8. Transmission (1) according to any of the preceding claims,
**characterised in that**
the heating element (20) can be electrically operated for generating the heat output.

9. Motor vehicle having a transmission (1) according to any of claims 1 to 8.

## Revendications

1. Boîte de vitesses (1) pour un véhicule automobile, avec un carter (10), lequel enferme au moins partiellement au moins une partie mobile de la boîte de vitesses (30) et, en fonctionnement normal de la boîte de vitesses (1), est rempli d'un fluide de fonctionnement (11), et avec un élément chauffant (20) qui est conçu pour délivrer une puissance thermique pour chauffer le milieu de fonctionnement (11), dans laquelle
l'élément chauffant (20) est conçu pour délivrer la puissance thermique au carter (10) par l'intermédiaire d'une première surface de couplage (28) et le carter (10) est conçu pour délivrer la puissance thermique au milieu de fonctionnement (11) par l'intermédiaire d'une seconde surface de couplage (29) et, de ce fait, la puissance thermique peut être transmise de l'élément chauffant (20) au milieu de fonctionnement (11) principalement ou complètement indirectement par l'intermédiaire du carter (10),
**caractérisée en ce que**
le carter (10) est constitué d'une partie de carter en un premier matériau et présente un élément conducteur de chaleur (12) pour répartir et/ou conduire la puissance thermique, dans laquelle l'élément conducteur de chaleur (12) est formé d'un second matériau, lequel présente un coefficient de conduction thermique supérieur à celui du premier matériau.

2. Boîte de vitesses (1) selon la revendication 1,
**caractérisée en ce qu'**
un dispositif de support (24) pour recevoir l'élément chauffant (20) est prévu sur le carter (10) et le dispositif de support (24) est vissé dans un filetage d'une ouverture de sortie (18) pour le milieu de fonctionnement (11).

3. Boîte de vitesses (1) selon la revendication 1 ou 2,
**caractérisée en ce que**
l'élément chauffant (20) est conçu pour délivrer au moins la moitié d'une puissance thermique générée par l'élément chauffant au carter (10) au moyen de la première surface de couplage (28).

4. Boîte de vitesses (1) selon l'une quelconque des revendications précédentes, **caractérisée en ce que**
la seconde surface de couplage (29) est plus grande que la première surface de couplage (28) par au moins un facteur de 2 et le carter (10) est conçu pour distribuer la puissance thermique de la première surface de couplage plus petite (28) à la seconde surface de couplage plus grande (29).

5. Boîte de vitesses (1) selon l'une quelconque des revendications précédentes, **caractérisée en ce que**
la boîte de vitesses (1) est conçue pour distribuer la puissance thermique au moyen du carter (10) et, de ce fait, la première surface de couplage (28) présente une température plus élevée que la seconde surface de couplage (29) pendant le fonctionnement de l'élément chauffant (20).

6. Boîte de vitesses (1) selon l'une quelconque des revendications précédentes, **caractérisée en ce que**
le côté extérieur du carter (10) présente une couche d'isolation thermique.

7. Boîte de vitesses (1) selon l'une quelconque des revendications précédentes, **caractérisée en ce que**
l'élément chauffant (20) pénètre au moins partiellement dans le carter (10).

8. Boîte de vitesses (1) selon l'une quelconque des revendications précédentes, **caractérisée en ce que**
l'élément chauffant (20) est actionnable électriquement pour générer la puissance thermique.

9. Véhicule automobile avec une boîte de vitesses (1) selon l'une quelconque des revendications 1 à 8.
